# EUROPÄISCHE PATENTSCHRIFT

(11) **EP 1 180 527 B1**
(45) Veröffentlichungstag und Bekanntmachung des Hinweises auf die Patenterteilung: **06.04.2005**
(21) Anmeldenummer: 01118704.4
(22) Anmeldetag: 03.08.2001
(51) Int. Cl.: C08F 2/28, C08F 257/02, D21H 21/16

(54) **Kationische Polymerdispersionen zur Papierleimung**
Cationic polymer dispersion for paper sizing
Dispersion de polymère cationique pour le collage du papier

(30) Priorität: 16.08.2000 DE 10039747; 21.09.2000 DE 10046770
(43) Veröffentlichungstag der Anmeldung: 20.02.2002
(73) Patentinhaber: Bayer Chemicals AG, 51368 Leverkusen (DE)
(72) Erfinder: Hauschel, Bernd, Dr., 51373 Leverkusen (DE); Buchholz, Vera, Dr., 51063 Köln (DE); Thiele, Bernd, 51519 Odenthal (DE); Kijlstra, Johan, Dr., 51467 Bergisch Gladbach (DE)

(56) Entgegenhaltungen:
- EP-A- 0 051 144
- DE-A- 2 454 397
- US-A- 4 379 869

## Beschreibung

Die vorliegende Erfindung betrifft kationische feinteilige wässrige Polymerdispersionen, welche zur Masse- und Oberflächenleimung von Papier, Pappe und Karton eingesetzt werden.

Zur Masse- und Oberflächenleimung von Papier, Pappe und Karton werden vorzugsweise Polymerdispersionen eingesetzt, welche kationische Ladungen aufweisen, da kationische Ladungen aufgrund ihrer Affinität zu Cellulosefasern besonders gut auf diese aufziehen.

Prinzipiell sind zwei Arten von wässrigen Dispersionen mit kationischen Gruppen bekannt, die zur Leimung von Papier eingesetzt werden können. Zum einen handelt es sich dabei um Polymerdispersionen, welche nur kationische Gruppen aufweisen und zum anderen um amphotere Polymerdispersionen, welche neben den kationischen auch anionische Gruppen aufweisen.

Aus DE 24 54 397 A sind kationische wässrige Copolymerisat-Dispersionen, hergestellt durch Emulsions-Copolymerisation olefinisch ungesättigter Monomere in Gegenwart kationischer polymerer Dispergiermittel bekannt. Die Herstellung des kationischen Dispergiermittels erfolgt durch Lösungspolymerisation von u.a. Monomeren, die quarternäre oder tertiäre Stickstoffgruppen aufweisen, wobei vorzugsweise in mit Wasser mischbaren organischen Lösungsmitteln gearbeitet wird, insbesondere werden niedermolekulare Alkohole oder Aceton eingesetzt. Bei Verwendung von kationischen Monomeren mit tertiärem Stickstoffatom wird zusätzlich zu den erwähnten Lösungsmitteln Ameisensäure zugesetzt, um die kationische Ladung einzuführen. Nachteilig an diesen Dispersionen ist ihr hoher Gehalt an leichtflüchtigen organischen Lösungsmitteln. Durch ihre Anwesenheit ergeben sich beim Trocknen des Papiers, welches bei Temperaturen von ca. 60 - 80°C durchgeführt wird, arbeitshygienische Probleme. Daher müssen leichtflüchtige organische Lösungsmittel durch einen Destillationsschritt aus dem Endprodukt entfernt werden, wodurch das Herstellverfahren dieser Produkte aufwendig wird.

In EP 051 144 A wird festgestellt, dass die aus der DE 24 54 397 A bekannten, kationischen wässrigen Copolymerisat-Dispersionen in ihrer Wirksamkeit als Leimungsmittel noch verbesserungsbedürftig sind. Eine Verbesserung wurde durch das Einpolymerisieren einer ethylenisch ungesättigten Carbonsäure oder von Maleinsäureanhydrid erreicht, wodurch man zu amphoteren wässrigen Polymerdispersionen gelangt. Es wird beschrieben, dass Filme aus getrockneten, amphoteren Dispersionen deutlich wasserfester als Filme aus ähnlich aufgebauten kationischen Dispersionen, wie beispielsweise in DE 24 54 397 A beschrieben, sind. Das Vorhandensein einer einpolymerisierten Carbonsäure führt jedoch zu einer erhöhten Schaumneigung der fertiggestellten Polymerdispersionen bei der Oberflächenleimung von Papier.

Es bestand daher ein Bedarf an verbesserten Polymerdispersionen, welche einen niedrigen Gehalt an leichtflüchtigen organischen Lösungsmitteln aufweisen, geringe Schaumneigung erkennen lassen und gute Leimungseigenschaften aufweisen.

Überraschenderweise wurden nun kationische feinteilige wässrige Polymerdispersionen gefunden, welche gegenüber den im Stand der Technik beschriebenen amphoteren Polymerdispersionen erhöhte Wirksamkeit aufweisen und keine oder nur kleine Mengen an leichtflüchtigen organischen Lösungsmitteln enthalten.

Die Erfindung betrifft kationische feinteilige wässrige Polymerdispersionen, erhältlich durch Polymerisation eines Monomerengemisches bestehend aus
a) 20 - 60 Gew.-% mindestens eines gegebenenfalls substituierten Styrols,
b) 40 - 80 Gew.-% mindestens eines C₁-C₁₈-(Meth)Acrylsäureesters und
c) 0 - 20 Gew.-% mindestens eines von a) und b) verschiedenen, nichtionischen ethylenisch ungesättigten Monomers,
   wobei die Summe aus a) + b) + c) 100 Gew.-% ergibt,
   in Gegenwart einer wässrigen Polymerdispersion erhältlich durch eine in einem Lösungsmittel bestehend aus einer gesättigten C₁-C₆-Carbonsäure und maximal 20 Gew.-% Wasser durchgeführten Lösungspolymerisation einer Monomerenmischung bestehend aus
d) 15 - 35 Gew.-% mindestens eines (Meth)acrylsäureesters und/oder (Meth)-acrylamids, welches eine tertiäre Aminogruppe enthält
e) 65 - 85 Gew.-% mindestens eines gegebenenfalls substituierten Styrols und
f) 0 - 20 Gew.-% mindestens eines von d) und e) verschiedenen, nichtionischen oder kationischen ethylenisch ungesättigten Monomers,
wobei die Summe aus d) + e) + f) 100 Gew.-% ergibt.

Die Herstellung der erfindungsgemäßen Polymerdispersion erfolgt durch Emulsionspolymerisation eines Monomerengemisches a) - c) in Gegenwart einer wässrigen Polymerdispersion, welche als Emulgator fungiert. Der Emulgator wird seinerseits durch Lösungspolymerisation der Monomerenmischung d) - f) in einer gesättigten C₁-C₆-Carbonsäure durchgeführt und gegebenenfalls nach Zwischenisolierung und/oder Aufarbeitung mit Wasser versetzt.

Zur Herstellung des Emulgators werden als Monomere der Gruppe d) vorzugsweise (Meth)acrylsäureester bzw. (Meth)acrylamide der Formel (I) eingesetzt, 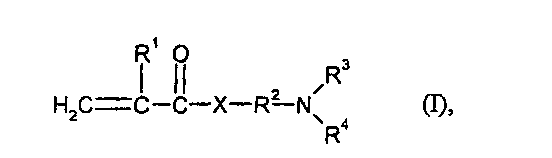 worin
- R¹: für H oder Methyl steht,
- R²: für einen linearen C₁-C₄-Alkylenrest steht,
- R³ und R⁴: gleich oder verschieden sind und für C₁-C₄-Alkyl stehen und
- X: für O oder NH steht.

Insbesondere werden als Monomere der Gruppe d) Verbindungen eingesetzt, welche der Formel (I) entsprechen, worin R³ und R⁴ gleich sind und für Methyl oder Ethyl stehen. Besonders bevorzugt werden als Monomere der Gruppe d) Verbindungen der Formel (I) eingesetzt, worin X für NH steht und R³ und R⁴ gleich sind und für _Methyl oder Ethyl stehen. Ganz besonders bevorzugt werden solche Monomere der Gruppe d) eingesetzt, welche der Formel (I) entsprechen, worin R¹ für H oder Methyl steht, R² für n-Propyl steht, R³ und R⁴ gleich sind und für Methyl stehen und X für NH steht.

Zur Herstellung des Emulgators wird als Monomer der Gruppe e) mindestens ein Styrol eingesetzt, welches gegebenenfalls substituiert sein kann. Aus der Reihe der substituierten Styrole werden vorzugsweise α-Methylstyrol oder Vinyltoluol eingesetzt. Besonders bevorzugt wird unsubstituiertes Styrol eingesetzt.

Zur Herstellung des Emulgators werden als Monomere der Gruppe f) von d) und e) verschiedene, nichtionische oder kationische ethylenisch ungesättigte Monomere eingesetzt. Vorzugsweise werden Nitrile wie beispielsweise Acrylnitril oder Methacrylnitril, Amide wie beispielsweise Acrylamid, Methacrylamid oder N-Methyolacrylamid, Vinylverbindungen wie beispielsweise Vinylacetat oder Vinylpropionat, Acrylsäure oder Methacrylsäureester aus Alkoholen mit 1 - 18 C-Atomen wie beispielsweise Methylacrylat, Methylmethacrylat, Ethylacrylat, Ethylmethacrylat, Propylacrylat, Propylmethacrylat, n-, iso- und tert.-Butylacrylat, n-, iso- und tert.-Butylmethacrylat, Hexylacrylat, Hexylmethacrylat, Ethylhexylacrylat, Stearylacrylat und Stearylmethacrylat oder Ester aus Acrylsäure bzw. Methacrylsäure, die durch Umsetzung mit mindestens einer Ethylenoxideinheit hergestellt wurden, wie beispielsweise Hydroxyethylmethacrylat oder Diethylenglykolmonomethacrylat, eingesetzt. Besonders bevorzugt werden als kationische Monomere der Gruppe f) Vinylpyridin oder die von der Formel (I) abgeleiteten quaternisierten Ammoniumsalze, die beispielsweise durch Umsetzung von Verbindungen gemäß Formel (I) mit gebräuchlichen Quaternisierungsreagenzien wie beispielsweise Methylchlorid, Benzylchlorid, Dimethylsulfat oder Epichlorhydrin erhalten werden können, eingesetzt wie beispielsweise 2-(Acryloyloxy)ethyltrimethylammoniumchlorid, 2-(Methacryloyloxy)ethyltrimethylammoniumchlorid, 3-(Acrylamido)propyltrimethylammoniumchlorid oder 3-(Methylacrylamido)propyltrimethylammoniumchlorid.

Die Gewichtsteile der unter d) - f) genannten Monomere beziehen sich auf die Gesamtmenge der zur Herstellung des Emulgators eingesetzten Monomere, wobei die Summe aus d) + e) +f) 100 Gew.-% ergibt. Vorzugsweise werden 20 bis 30 Gew.-% d), 70 bis 80 Gew.-% e) und 0 bis 10 Gew.-% f) eingesetzt.

Die zur Herstellung des Emulgators durchgeführte Lösungspolymerisation wird als radikalische Polymerisation in einer gesättigten C₁-C₆-Carbonsäure als Lösungsmittel durchgeführt. Dabei können sowohl gesättigte C₁-C₆-Monocarbonsäuren, als auch gesättigte C₁-C₆-Dicarbonsäuren eingesetzt werden, vorzugsweise werden gesättigte C₁-C₆-Monocarbonsäuren eingesetzt. Die eingesetzten gesättigten C₁-C₆-Carbonsäuren tragen gegebenenfalls weitere Substituenten wie beispielsweise Hydroxylgruppen. Die Lösungspolymerisation wird vorzugsweise in Ameisensäure, Essigsäure, Propionsäure, Buttersäure, Isobuttersäure, Valeriansäure, Isovaleriansäure, Capronsäure, Hydroxypropionsäure oder Hydroxybuttersäure durchgeführt. Es sind auch Mischungen verschiedener gesättigter C₁-C₆-Carbonsäuren einsetzbar. Bevorzugt wird die Lösungspolymerisation in Ameisensäure, Essigsäure, Propionsäure oder Hydroxypropionsäure durchgeführt, besonders bevorzugt in Essigsäure. Das eingesetzte Lösungsmittel besteht dabei vorzugsweise aus gesättigter C₁-C₆-Carbonsäure und bevorzugt maximal 10 Gew.-% Wasser, ganz besonders bevorzugt maximal 1 Gew.-% Wasser, bezogen auf die Gesamtmenge an Lösungsmittel. Ganz besonders bevorzugt wird die Lösungspolymerisation in mindestens 99 %iger Essigsäure ohne Beimischung anderer Carbonsäuren durchgeführt. Die Menge an Lösungsmittel wird so gewählt, dass die Konzentration der resultierenden Emulgatorlösung 20 bis 70 Gew.-% beträgt, berechnet aus der Menge an eingesetzten Monomeren.

Die Lösungspolymerisation wird bevorzugt in Gegenwart eines Polymerisationsreglers durchgeführt. Als Polymerisationsregler kommen vor allem Schwefelverbindungen wie beispielsweise Thioglykolsäure oder Mercaptane wie beispielsweise Ethylmercaptan, n-Butylmercaptan, tert.-Butylmercaptan, n-Dodecylmercaptan oder tert.-Dodecylmercaptan in Frage. Vorzugsweise werden Mercaptane eingesetzt, besonders bevorzugt C₈-C₁₄-Alkylmercaptane.

Die Lösungspolymerisation wird durch einen Radikalstarter initiiert. Als Radikalstarter für die Lösungspolymerisation werden vorzugsweise Peroxo- oder Azoverbindungen wie beispielsweise Wasserstoffperoxid, Natrium-, Kalium- und Ammoniumperoxodisulfat, Di-tert-Butylperoxid, Dibenzoylperoxid, Azobisisobutyronitril, 2,2'-Azobis(2-methylbutyronitril), 2,2'-Azobis(2,4-dimethylvaleronitril) oder 2,2'-Azobis(2-amidinopropan)dihydrochlorid eingesetzt. Bevorzugt werden Azoverbindungen eingesetzt, besonders bevorzugt Nitrile wie beispielsweise Azobisisobutyronitril, 2,2'-Azobis(2-methylbutyronitril) oder 2,2'-Azobis(2,4-dimethylvaleronitril).

Die Menge an Radikalstarter und Polymerisationsregler bei Durchführung der Lösungspolymerisation wird so gewählt, dass man einen Emulgator mit einem massenmittleren Molgewicht von 5.000 bis 100.000 g/mol erhält. Die Bestimmung der Molgewichtsverteilung und des massenmittleren Molgewichts kann durch dem Fachmann bekannte Methoden wie beispielsweise Gelpermeationschromatographie, Lichtstreuung oder Ultrazentrifugation durchgeführt werden.

Die Polymerisationstemperatur für die Lösungspolymerisation beträgt vorzugsweise 30-105 °C, besonders bevorzugt 70-100°C. Die Temperatur kann auch höher sein, wenn in einem Druckreaktor unter Überdruck gearbeitet wird. Vorzugsweise wird die Lösungspolymerisation in einer Inertgasatmosphäre wie beispielsweise in einer Stickstoffatmosphäre, durchgeführt. Eine gute Durchmischung des Reaktionsansatzes ist von Vorteil, dazu können geeignete Rührer eingesetzt werden. Die Polymerisationsdauer beträgt üblicherweise 1-10 h.

Bei der Durchführung der Lösungspolymerisation zur Herstellung des Emulgators wird in einer bevorzugten Ausführungsform die gesättigte C₁-C₆-Carbonsäure teilweise oder ganz im Reaktionsgefäß vorgelegt. Monomere, Radikalstarter und gegebenenfalls Polymerisationregler werden vorzugsweise ganz oder teilweise in der C₁-C₆-Carbonsäure vorgelegt oder in einer anderen bevorzugten Ausführung, kontinuierlich bzw. gestaffelt zum Reaktionsansatz zudosiert.

In einer weiteren bevorzugten Ausführungsform der Lösungspolymerisation werden die Monomere und gegebenenfalls der Polymerisationsregler in der C₁-C₆-Carbonsäure vorgelegt und der Radikalstarter wird über einen bestimmten Zeitraum der Reaktionsmischung zudosiert. Dabei kann die Zugabe des Radikalstarters über den Dosierzeitraum entweder gleichmäßig oder ungleichmäßig erfolgen.

In einer weiteren bevorzugten Ausführungsform der Lösungspolymerisation wird die Essigsäure und gegebenenfalls der Polymerisationsregler vorgelegt, während die Monomere und der Radikalstarter dem Reaktionsgemisch kontinuierlich zugeführt werden. Dabei können alle Zudosierungen entweder gleichmäßig oder ungleichmäßig über den Dosierzeitraum erfolgen. Bei Einsatz eines Polymerisationsreglers wird dieser entweder komplett vorgelegt oder kontinuierlich dem Reaktionsgemisch während der Polymerisation zugeführt.

In allen oben genannten Ausführungsformen wird der Radikalstarter dem Reaktionsansatz entweder in fester, flüssiger oder gelöster Form zugeführt. Handelt es sich bei dem Radikalstarter um einen Feststoff, so ist die Verwendung einer Lösung dieses Radikalstarters bevorzugt. Als Lösungsmittel wird vorzugsweise oder die als Lösungsmittel verwendete gesättigte C₁-C₆-Carbonsäure eingesetzt. Besonders bevorzugt wird zur Lösung eines Radikalstarters, der als Feststoff vorliegt, eine gesättigte C₁-C₆-Carbonsäure, besonders bevorzugt Essigsäure eingesetzt, da so das Endprodukt völlig frei von leichtflüchtigen organischen Lösungsmittel ist.

Nach Abschluss der Lösungspolymerisation wird der erhaltene Emulgator entweder zwischenisoliert oder direkt mit Wasser versetzt. Vorzugsweise wird der erhaltene Emulgator direkt mit Wasser versetzt und durch Rühren eine homogene Flüssigphase hergestellt, in der der Emulgator teilweise gelöst und teilweise dispergiert vorliegt. Die Konzentration des Emulgators in der Flüssigphase nach Wasserzusatz beträgt vorzugsweise 2 bis 20 Gew.-%, besonders bevorzugt 5 bis 15 Gew.-%. Diese Flüssigphase kann direkt als Vorlage zur Durchführung der Emulsionspolymerisation zur Herstellung der erfindungsgemäßen kationischen feinteiligen wässrigen Polymerdispersion eingesetzt werden.

Das zweistufige Verfahren kann somit sehr einfach in einem Eintopfverfahren durchgeführt werden, ohne dass der Emulgator isoliert oder aufgearbeitet werden muss.

Die erfindungsgemäße kationische feinteilige wässrige Polymerdispersion wird durch Emulsionspolymerisation eines Monomerengemisches bestehend aus a) - c) hergestellt, wobei die in der ersten Stufe hergestellte wässrige Polymerdispersion als Emulgator dient.

Zur Herstellung der erfindungsgemäßen kationischen feinteiligen wässrigen Polymerdispersion werden als Monomere der Gruppe a) Styrol und/oder substituierte Styrole wie beispielsweise α-Methylstyrol oder Vinyltoluol eingesetzt. Besonders bevorzugt wird unsubstituiertes Styrol eingesetzt.

Zur Herstellung der erfindungsgemäßen kationischen feinteiligen wässrigen Polymerdispersion werden als Monomere der Gruppe b) mindestens ein C₁-C₁₈-(Meth)Acrylsäureester eingesetzt. Vorzugsweise werden Methacrylat, Methylmethacrylat Ethylacrylat, Ethylmethacrylat, Propylacrylat, Propylmethacrylat, n-, iso- und tert.-Butylacrylat, n-, iso- und tert.-Butylmethacrylat, Hexylacrylat, Hexylmethacrylat, Ethylhexylacrylat, Stearylacrylat und Stearylmethacrylat eingesetzt. Besonders bevorzugt werden n-Butylacrylat oder binäre Gemische, welche zwischen 10 und 90 Gew.-% n-Butylacrylat enthalten, eingesetzt. Ganz besonders bevorzugt werden Gemische aus n-Butylacrylat und tert.-Butylacrylat eingesetzt.

Zur Herstellung der erfindungsgemäßen kationischen feinteiligen wässrigen Polymerdispersion werden als Monomere der Gruppe c) mindestens ein von a) und b) verschiedenes, nichtionisches, ethylenisch ungesättigtes Monomer eingesetzt. Vorzugsweise werden Nitrile wie beispielsweise Acrylnitril oder Methacrylnitril, Amide wie beispielsweise Acrylamid, Methacrylamid oder n-Methylolacrylamid, Vinylverbindungen wie beispielsweise Vinylacetat oder Vinylpropionat, Diene wie beispielsweise Butadien oder Isopren sowie Ester aus Acrylsäure bzw.

Methacrylsäure und mindestens einer Ethylenoxideinheit wie beispielsweise Hydroxyethylmethacrylat oder Diethylenglykolmonomethacrylat eingesetzt.

Die Gewichtsanteile der unter a) - c) genannten Monomere beziehen sich auf die Gesamtmenge der zur Herstellung der zweiten Stufe eingesetzten Monomere, wobei die Summe aus a) + b) + c) 100 Gew.-% ergibt. Vorzugsweise werden 30 bis 50 Gew.-% a) und 50 bis 70 Gew.-% b) und 0 bis 10 Gew.-% c) eingesetzt.

Zur Herstellung der erfindungsgemäßen kationischen feinteiligen wässrigen Polymerdispersion werden die Monomeren a) - c) bei der Durchführung der Emulsionspolymerisation vorzugsweise kontinuierlich zum Reaktionsansatz zudosiert, entweder als Mischung oder getrennt voneinander. Dabei kann die Zugabe über den Dosierzeitraum gleichmäßig oder ungleichmäßig, d.h. mit wechselnder Dosiergeschwindigkeit erfolgen.

Zur Initiierung der Emulsionspolymerisation wird ein Radikalstarter verwendet. Als Radikalstarter werden vorzugsweise Peroxo- oder Azoverbindungen wie beispielsweise Kalium-, Natrium- oder Ammoniumperoxodisulfat, Wasserstoffperoxid, tert.-Butylhydroperoxid, Di-tert.-butylperoxid, Dibenzyolperoxid, Azobisisobutyronitril oder 2,2'-Azobis(2-methylbutyronitril) eingesetzt. Bevorzugt werden als Radikalstarter wasserlösliche Radikalstarter eingesetzt, besonders bevorzugt Wasserstoffperoxid. Vorzugsweise werden die bevorzugten wasserlöslichen Radikalstarter mit Reduktionsmitteln kombiniert wie beispielsweise Natriumsulfit, Natriumpyrosulfit, Natriumhydrogensulfit, Natriumdithionit, Hydroxymethansulfinsäure-Natriumsalz oder Ascorbinsäure. Weiterhin werden die bevorzugten wasserlöslichen Radikalstarter vorzugsweise mit Schwermetallsalzen wie beispielsweise Cer-, Mangan- oder Eisen(II)Salzen zu einem Redoxsystem kombiniert. Besonders bevorzugt wird Wasserstoffperoxid in Kombination mit einem Reduktionsmittel und/oder einem Schwermetallsalz eingesetzt. In einer weiteren bevorzugten Ausführungsform werden ternäre Startersysteme, bestehend aus wasserlöslichem Radikalstarter, Reduktionsmittel und Schwermetallsalz eingesetzt, bevorzugt ist das ternäre Startersystem Wasserstoffperoxid, Eisen(II)sulfat und Ascorbinsäure.

Vorzugsweise wird ein Teil der Radikalstartermenge vor Beginn der Monomerenzugabe vorgelegt und der Rest während der Polymerisation kontinuierlich zugeführt. In einer weiteren bevorzugten Ausführungsform wird die Gesamtmenge des Radikalstarters kontinuierlich zugeführt, wobei man die Dosierung des Radikalstarters und die Zudosierung der Monomeren vorzugsweise gleichzeitig beginnt.

Wird in einer bevorzugten Ausführungsform der Emulsionspolymerisation ein wasserlöslicher Radikalstarter mit einem Reduktionsmittel kombiniert, so verfährt man vorzugsweise so, dass das Reduktionsmittel vor Beginn der Emulsionpolymerisation vorgelegt wird.

Wird zur Initiierung der Emulsionspolymerisation ein wasserlöslicher Radikalstarter in Kombination mit einem Schwermetallsalz verwendet, so wird vorzugsweise nach Abschluss der Polymerisation ein Komplexbildner zur Komplexierung des eingesetzten Schwermetallsalzes zugesetzt. Bevorzugte Komplexbildner sind beispielsweise Ethylendiamintetraessigsäure, Nitrilotriessigsäure, Diethylentriaminpentaessigsäure, Polyasparaginsäure, Iminodibemsteinsäure bzw. die entsprechenden Salze der vorgenannten Säuren. Die Menge an eingesetztem Komplexbildner hängt von der eingesetzten Menge an Schwermetallsalz ab, sie beträgt vorzugsweise 1 bis 10 Mol pro Mol Schwermetallion.

In einer bevorzugten Ausführungsform wird zur Herstellung der erfindungsgemäßen kationischen feinteiligen wässrigen Polymerdispersion nach Abschluss der Emulsionspolymerisation zur Reduzierung des Restmonomerengehalts ein öllöslicher, in Wasser schwerlöslicher Radikalstarter zur Nachaktivierung zugesetzt. Es handelt sich dabei um Verbindungen, die bei Raumtemperatur vorzugsweise eine Wasserlöslichkeit < 1 % aufweisen. Bevorzugt werden organische Peroxide wie beispielsweise Dibenzoylperoxid, Di-tert.-Butylperoxid, tert.-Butylhydroperoxid, Cumolhydroperoxid oder Bis-cyclohexylperoxodicarbonat eingesetzt. Durch Nachaktivierung mit einem öllöslichen, in Wasser schwerlöslichen Radikalstarter können die Gehalte aller Restmonomere unter 100 ppm abgesenkt werden.

Der pH-Wert des Emulsionspolymerisationsansatzes liegt vorzugsweise zwischen 2 und 5. Der pH-Wert kann vor Durchführung der Emulsionspolymerisation durch Zusatz von Säuren, Basen oder Puffern eingestellt werden. Vorzugsweise wird die Emulsionspolymerisaton ohne weitere Zusätze von Säuren, Basen oder Puffern durchgeführt. Vor oder während der Emulsionspolymerisation können zur Erhöhung der Dispergierwirkung übliche niedermolekulare nichtionische, anionische oder kationische Emulgatoren zugesetzt werden. Beispiele hierfür sind Natriumalkylsulfonate, Natriumalkylsulfate, Natriumdodecylbenzolsulfonat, Sulfobernsteinsäureester, Fettalkoholethoxylate, Alkylarylethoxylate, primäre, sekundäre und tertiäre Fettaminsalze, quartäre Alkylammoniumsalze, Alkylbenzylammoniumsalze, quartäre Amidoaminverbindungen, Alkylpyridiniumsalze, Alkylimidazoliniumsalze oder Alkyloxazoliniumsalze. Vorzugsweise wird die Emulsionspolymerisation ohne Zusatz von niedermolekularen Emulgatoren durchgeführt.

Die Polymerisationstemperatur für die Emulsionspolymerisation beträgt vorzugsweise 30-100 °C, besonders bevorzugt 70-100°C. Die Temperatur kann auch höher sein, wenn in einem Druckreaktor unter Überdruck gearbeitet wird. Vorzugsweise wird die Emulsionspolymerisation in einer Inertgasatmosphäre, wie beispielsweise in einer Stickstoffatmosphäre, durchgeführt. Eine gute Durchmischung des Reaktionsansatzes ist von Vorteil, dazu können geeignete Rührer eingesetzt werden. Die Polymerisationsdauer beträgt üblicherweise 0,5-10 h.

Die Konzentration der erfindungsgemäßen kationischen feinteiligen wässrigen Polymerdispersion beträgt vorzugsweise 10 bis 40 Gew.-%, besonders bevorzugt 15 bis 35 Gew.-%. Die Viskosität einer 20 %igen Dispersion beträgt in der Regel 3 bis 30 mPas, gemessen bei einer Temperatur von 23°C. Die mittlere Teilchengröße einer 20 %igen Dispersion ist vorzugsweise < 100 nm, besonders bevorzugt beträgt sie 5 bis 50 nm. Die mittlere Teilchengröße kann durch dem Fachmann bekannte Methoden wie beispielsweise Laserkorrelationsspektroskopie, Ultrazentrifugation oder Trübungsmessung ermittelt werden.

Zur Erhöhung der Stabilität der erfindungsgemäßen kationischen feinteiligen wässrigen Polymerdispersionen gegen Pilz- und/oder Bakterienbefall wird vorzugsweise ein Biozid zugesetzt. Vorzugsweise werden Biozide auf Basis von Isothiazolinonen, Benzisothiazolinonen oder Biozide auf Basis von Benzylalkohol-Formaldehyd-Kondensaten, die nach Zugabe zur wässrigen Dispersion Formaldehyd freisetzen, eingesetzt.

Bei den erfindungsgemäßen Dispersionen handelt es sich um kationische Leimungsmittel, welche ganz oder weitgehend frei von organischen Lösugsmitteln sind und eine hohe Wirksamkeit sowie eine geringe Schaumneigung aufweisen. Sie sind für die Masse- und Oberflächenleimung von Papier, Pappe und Karton einsetzbar. Vorzugsweise sind die erfindungsgemäßen Dispersionen zur Leimung von alaunhaltigen oder alaunfreien, sauer oder neutral hergestellten, mit Kaolin, natürlicher oder gefällter Kreide, Talkum, Titandioxid oder anderen Füllstoffen gefüllten Papieren geeignet. Als geeignete Faserstoffe kommen gebleichte oder ungebleichte, holzfreie oder holzhaltige, altpapierhaltige oder deinkte Stoffe in Frage. Besonders geeignet sind die erfindungsgemäßen Dispersionen zur Masse- und Oberflächenleimung von Papieren, Pappen und Kartons aus holzhaltigen und altpapierhaltigen Stoffen wie beispielsweise Wellpappen und Kartons zu Verpackungszwecken, Zeitungsdruckpapieren, oder holzhaltigen Druckpapieren. Oft werden beispielsweise Verpackungspapiere aus Altpapier mit basischen oder kationischen Farbstoffen gefärbt, mit denen sich die erfindungsgemäßen Dispersionen in hervorragender Weise vertragen, während dies bei amphoteren oder anionischen Dispersionen nicht der Fall ist.

In einer bevorzugten Ausführungsform werden die erfindungsgemäßen Dispersionen als Masseleimungsmittel eingesetzt, da sie aufgrund ihrer kationischen Ladungen eine Affinität zu den Cellulosefasern besitzen und bei Zusatz zum Papierstoff auf diese aufziehen. Dabei werden die erfindungsgemäßen Dispersionen vorzugsweise in der Nasspartie der Papiermaschine, d.h. vor der Blattbildung mit dem Papierstoff, zugesetzt, gegebenenfalls in Kombination mit anderen Masseleimungsmitteln. Die Menge an Leimungsmittel (berechnet als polymerer Feststoff) beträgt bei der Masseleimung vorzugsweise 0,1 bis 3 Gew.-%, bezogen auf den trockenen Papierstoff. Der Vorteil gegenüber den weit verbreiteten Masseleimungsmitteln Alkylketendimer (AKD) oder Alkenylbernsteinsäureanhydrid (ASA) ist die Ausbildung des vollen Leimungseffektes unmittelbar nach der Trockenpartie der Papiermaschine, während bei AKD und ASA üblicherweise eine Nachreifezeit zur Ausbildung des vollen Leimungseffektes erforderlich ist. Weiterhin kann der gewünschte Leimungsgrad über die Wahl der Zugabemenge genau eingestellt werden, was beispielsweise bei der Verwendung von AKD sehr schwierig ist.

In einer weiteren bevorzugten Ausführungsform werden die erfindungsgemäßen Dispersionen als Oberflächenleimungsmittel eingesetzt. Dabei können die Rohpapiere in der Masse entweder ungeleimt oder mit üblichen Masseleimungsmitteln wie beispielsweise Harzleim, AKD oder ASA vorgeleimt sein. Die Applikation erfolgt mit Hilfe von üblichen Auftragsaggregaten wie beispielsweise Leimpresse, Filmpresse, Speedsizer oder Gate-Roll. Werden die erfindungsgemäßen Dispersionen als Oberflächenleimungsmittel eingesetzt, so werden vorzugsweise 0,1 - 10 Gew.-% zur Leimflotte zugesetzt. Die genaue Menge richtet sich nach der Vorleimung des Rohpapiers und nach dem gewünschten Leimungseffekt. Vorzugsweise werden die erfindungsgemäßen Dispersionen als Oberflächenleimungsmitteln gemeinsam mit 0 bis 20 Gew.-% Stärke in der Leimflotte eingesetzt. Die erfindungsgemäßen Dispersionen sind mit gebräuchlichen Leimpressestärken, wie beispielsweise enzymatisch oder oxidativ abgebauten oder derivatisierten Stärken, insbesondere kationischen Stärken, sehr gut verträglich. Werden die erfindungsgemäßen Dispersionen als Oberflächenleimungsmittel eingesetzt, so eignen sie sich hervorragend für den gemeinsamen Einsatz mit Farbstoffen, vorzugsweise basischen oder kationischen Farbstoffen. Weiterhin eignen sich die erfindungsgemäßen Dispersionen hervorragend zum gemeinsamen Einsatz mit anorganischen Weißpigmenten. Diese können der Leimflotte zur Verbesserung der Bedruckbarkeit zugesetzt werden. Beispiele hierfür sind natürliche oder gefällte Kreide, Kaolin, Bariumsulfat, Titandioxid oder Annaline.

Besonders vorteilhaft ist die hohe Stabilität der erfindungsgemäßen Dispersionen gegen Elektrolyte wie beispielsweise Natriumchlorid, Kalziumcarbonat, Magnesiumcarbonat oder Aluminiumsulfat. Die Kationen und Anionen aus diesen Elektrolyten sind oft in Leimflotten enthalten, entweder durch Migration aus der Papierbahn, durch gezielten Zusatz oder durch Eintrag mit dem in der Papierfabrik verwendeten Frischwasser.

Die erfindungsgemäßen Dispersionen verleihen den geleimten Papieren sehr gute Eigenschaften hinsichtlich aller modernen Druckverfahren, insbesondere bei Anwendung in der Oberfläche. So sind beim Inkjet-Druck hohe Farbdichte und Brillanz, geringes Durchschlagen, hohe Kantenschärfe und wenig Ausbluten bei gleichzeitiger Wisch- und Wasserfestigkeit gefordert. Durch Oberflächenanwendung der erfindungsgemäßen Dispersionen werden diese Anforderungen in sehr guter Weise erfüllt. Bei der Verwendung von Tonern, also beispielsweise bei üblichen Kopiergeräten und Laserdruckern, ist eine hohe Tonerhaftung bezüglich des bedruckten Papieres gefordert. Auch diese Eigenschaft wird durch Oberflächenanwendung der erfindungsgemäßen Dispersionen auf beispielsweise in der Masse mit AKD vorgeleimten Papieren in hervorragender Weise erfüllt. Weiterhin eignen sich die erfindungsgemäßen Dispersionen bei Oberflächenanwendung zur Verminderung von Stauben und Rupfen, was für alle üblichen Druckverfahren von Vorteil ist.

### Beispiel 1

### Herstellung des Emulgators

In einem 2l-Planschliffkolben mit Rührer und Mantelheizung wurde ein Mischung aus 638,6 g Styrol; 231,4 g N,N-Dimethylaminopropylmethacrylamid; 10,4 g tert-Dodecylmercaptan (95 %ig) und 550 g Eisessig bei Raumtemperatur vorgelegt und unter Stickstoffatmosphäre und Rühren auf 95°C erhitzt. Nach Erreichen der 95°C wurde dann unter fortwährendem Rühren eine Lösung von 12,8 g Azobisisobutyronitril in 230 g Eisessig über eine Dauer von 120 min gleichmäßig zu der Reaktionslösung zudosiert. Der Ansatz wurde dann noch 120 min bei 95°C nachgerührt und anschließend abgekühlt. Ein Teil des Ansatzes wurde abgelassen, 275,8 g verblieben zur Herstellung der 2. Stufe in der Apparatur. Man erhielt eine klare Polymerlösung mit einer Viskosität von 73000 mPas.

### Herstellung der kationischen Polymerdispersion

Die in der Apparatur verbliebenen 275,8 g des Emulgators wurden bei Raumtemperatur unter Rühren mit 1223 g vollentsalztem Wasser versetzt. Die Mischung wurde unter Stickstoffatmosphäre und fortwährendem Rühren auf 85°C erhitzt. Man erhielt eine homogene, leicht trübe Flüssigphase. Nach Erreichen der Reaktionstemperatur wurde das Vorlagegemisch 15 min nachgerührt und dann mit 4,0 g einer 1%igen Eisen(II)sulfatlösung versetzt. Anschließend wurde gleichzeitig und mit konstanter Dosiergeschwindigkeit aus getrennten Zuläufen eine Mischung aus 88,8 g Styrol; 67,5 g n-Butylacrylat und 67,5 g tert-Butylacrylat sowie 78,3 g einer 3 %igen Wasserstoffperoxid-Lösung über 90 min zum Reaktionsgemisch zudosiert, wobei die Temperatur konstant gehalten wurde. Nach Beendigung der Zuläufe wurde der Ansatz noch 15 min bei 85°C nachgerührt und dann mit 3,0 g tert-Butylhydroperoxid (80 %ig) zur Nachaktivierung versetzt. Nach einer nochmaligen Nachrührzeit von 60 min bei 85°C wurde der Ansatz abgekühlt und bei Raumtemperatur mit 0,9 g Preventol® D2 versetzt.

Man erhielt eine feinteilige Polymerdispersion mit einem Feststoffgehalt von 19,8 % und einer Extinktion von 0,64 (gemessen an einer auf 2,5 % verdünnten wässrigen Probe bei 660 nm).

### Vergleichsbeispiel 1 gemäß der Lehre der EP 051 144 A

Die Herstellung erfolgt analog zur nachfolgenden Vorschrift.

### Herstellung des Emulgators

In einem 2l-Planschliffkolben mit Rührer und Mantelheizung wurde eine Mischung aus 119,0 g Styrol; 43,0 g N,N-Dimethylaminopropylmethacrylamid; 90 g Eisessig und 1,5 g Azobisisobutyronitril bei Raumtemperatur vorgelegt und unter Stickstoffatmosphäre und Rühren auf 85°C erhitzt. Nach Erreichen der Reaktionstemperatur wurde noch 30 min nachgerührt und dann eine Lösung von 1,9 g Azobisisobutyronitril in 11 g Aceton über eine Dauer von 60 min gleichmäßig zu der Reaktionslösung zudosiert. Der Ansatz wurde dann noch 30 min bei 85°C nachgerührt und anschließend mit 875 g vollentsalztem Wasser versetzt. Zur Auflösung des Polymerisats wurde noch 35 min bei 65-85°C gerührt und dann abgekühlt.

### Herstellung der kationischen Polymerdispersion

Der auf 85°C erhitzte Emulgator aus Stufe 1 wurde zunächst 15 min gerührt und dann nacheinander mit 6 g einer 1 %igen Eisen(II)sulfatlösung und 30,0 g einer 6 %igen Wasserstoffperoxid-Lösung versetzt. Anschließend wurde gleichzeitig mit konstanter Dosiergeschwindigkeit aus getrennten Zuläufen eine Mischung aus 99,0 g Styrol; 94,5 g n-Butylacrylat und 94,5 g tert-Butylacrylat sowie 120,0 g einer 6%igen Wasserstoffperoxid-Lösung über 120 min zum Reaktionsgemisch zudosiert, wobei die Temperatur konstant gehalten wurde. Nach Beendigung der Zuläufe wurde der Ansatz noch 60 min bei 85°C nachgerührt, anschließend abgekühlt und dann mit 1,6 g Preventol® D2 versetzt.

Man erhielt eine feinteilige Polymerdispersion mit einem Feststoffgehalt von 28,2 % und einer Extinktion von 2,24 (gemessen an einer 1:10 verdünnten wässrigen Probe bei 660 nm).

### Herstellung der 1. Stufe, analog zu Beispiel 1, EP 051 144 A

In einem 21-Planschliffkolben mit Rührer und Mantelheizung wurde eine Mischung aus 90,0 g Styrol; 49,5 g N,N-Dimethylaminopropylmethacrylamid; 22,5 g Acrylsäure; 90,0 g Eisessig und 1,5 g Azobisisobutyronitril bei Raumtemperatur vorgelegt und unter Stickstoffatmosphäre und Rühren auf 85°C erhitzt. Nach Erreichen der Reaktionstemperatur wurde noch 30 min nachgerührt und dann eine Lösung von 1,9 g Azobisisobutyronitril in 11,0 g Aceton über eine Dauer von 60 min gleichmäßig zu der Reaktionslösung zudosiert. Der Ansatz wurde dann noch 30 min bei 85°C nachgerührt und anschließend mit 875 g vollentsalztem Wasser versetzt. Zur Auflösung des Polymerisats wurde noch 55 min bei 65-85°C gerührt und dann abgekühlt.

### Herstellung der 2. Stufe:

Die auf 85°C, erhitzte Polymerlösung aus Stufe 1 wurde zunächst 15 min gerührt und dann nacheinander mit 6,0 g einer 1 %igen Eisen(II)sulfatlösung und 30,0 g einer 6 %igen Wasserstoffperoxid-Lösung versetzt. Anschließend wurde gleichzeitig und mit konstanter Dosiergeschwindigkeit aus getrennten Zuläufen eine Mischung aus 99,0 g Styrol; 94,5 g n-Butylacrylat und 94,5 g tert-Butylacrylat sowie 120 g einer 6 %igen Wasserstoffperoxid-Lösung über 120 min zum Reaktionsgemisch zudosiert, wobei die Temperatur konstant gehalten wurde. Nach Beendigung der Zuläufe wurde der Ansatz noch 60 min bei 85°C nachgerührt, anschließend abgekühlt und dann mit 1,6 g Preventol® D2 versetzt.

Man erhielt eine feinteilige Polymerdispersion mit einem Feststoffgehalt von 29,1 % und einer Extinktion vor 2,12 (gemessen an einer 1:10 verdünnten wässrigen Probe bei 660 nm).

### Anwendungsbeispiele

### Leimungswirkung

Die Oberflächenausrüstung verschiedener Prüfpapiere mit den erfindungsgemäßen Dispersionen und den Vergleichsdispersionen erfolgte mit einer Laborleimpresse der Fa. Mathis, Zürich, Type HF. Die Leimpressenflotte enthielt 5 Gew.-Teile einer oxidierten Kartoffelstärke (Perfectamyl® A 4692) sowie 0,4 - 1,2 Teile der Dispersionen aus dem Beispiel 1 und dem Vergleichsbeispiel 1, aufgefüllt mit Wasser auf 100 Teile. Die Prüfpapiere wurden 1 - 3 mal durch die Leimpressenflotte geführt, um jeweils einen hinreichenden Nassauftrag zu erreichen. Als Nassauftrag ist hier die Menge an Leimpressenflotte in Prozent zu verstehen, die bezogen auf den trockenen Papierstoff von diesem aufgenommen wurde, gegebenenfalls nach mehreren Leimpressendurchgängen.

Die Leimungswirkung der erfindungsgemäßen Dispersionen und der Vergleichsdispersionen wurde auf folgenden Papieren getestet:
- Papier a):: ungeleimtes füllstoffhaltiges Streichrohpapier, Flächengewicht 80 g/m², Nassauftrag 68 % (Beispiel 1). Papier a) wurde zur Ausrüstung pro Flottenansatz einmal durch die Leimpresse geführt. Darauf bezieht sich der Nassauftrag.
- Papier b):: ungeleimtes Papier aus 100% gemischtem Altpapier, Flächengewicht 120 g/m², Nassauftrag 60%. Papier b) wurde zur Ausrüstung pro Flottenansatz dreimal durch die Leimpresse geführt. Darauf bezieht sich der Nassauftrag.
- Papier c):: ungeleimter Testliner aus 100 % gemischtem Altpapier, Flächengewicht 115 g/m², Nassauftrag 45 %. Papier c) wurde zur Ausrüstung pro Flottenansatz zweimal durch die Leimpresse geführt. Darauf bezieht sich der Nassauftrag.
- Papier d):: ungeleimter Kaschierkarton aus 100 % gemischtem Altpapier, Flächengewicht 190 g/m², Nassauftrag 29%. Papier d) wurde zur Ausrüstung pro Flottenansatz zweimal durch die Leimpresse geführt. Darauf bezieht sich der Nassauftrag.

Die Trocknung der oberflächengeleimten Papiere erfolgte auf einem Trockenzylinder innerhalb einer Minute bei 90°C. Anschließend wurden die Papiere 2 Stunden im Normklima (23°C, 50 % relative Feuchte) klimatisiert, bevor der Leimungsgrad bestimmt wurde.

Zur Beurteilung des Leimungsgrades der oberflächengeleimten Papiere wurden die Cobb₆₀-Werte nach DIN 53122 bestimmt. Als Cobb₆₀-Wert ist die Wasseraufnahme des Papierblatts in g/m² nach einem Kontakt mit Wasser und einer Kontaktzeit von 60 s definiert. Je niedriger dieser Wert ist, desto besser ist der Leimungsgrad des jeweiligen Papiers.

Die Cobb₆₀-Werte der Dispersion aus Beispiel 1 sind in Tabelle 1 zusammengefasst.

**Tabelle 1**

| Ergebnisse der Leimungsprüfung, Papiere a) und b) mit der erfindungsgemäßen Dispersionen | | | |
|---|---|---|---|
| | | Beispiel 1 | |
| Feststoffgehalt | % | 19,8 | |
| Einsatzmenge fest | % | 0,16 | 0,24 |
| **Cobb-Test** | | | |
| Papier a) | g/m² | 55 | 23,6 |
| Papier b) | g/m² | 22,6 | 20,3 |

### Schaumneigung

Die Neigung zur Schaumbildung wurde folgendermaßen bestimmt:

In einen Zylinder (Höhe: 42 cm, Durchmesser: 6 cm) wurden je 250 ml einer Leimpressenflotte aus Beispiel 1 und Vergleichsbeispiel 1 gegeben. Die Leimpressenflotten enthielten jeweils 5 Gew.-% Perfectamyl® A4692 und 1 Gew.-% Polymerdispersion gemäß Beispiel 5 bzw. Vergleichsbeispiel 2. Mittels eines kleinen Propellers (1000 U/min) und durch Einleiten von Luft (400 ml/min) wurde Schaum erzeugt. Nach 2 Minuten wurde die Luftzufuhr unterbrochen und der Rührer abgestellt. Die resultierende Schaummenge wurde abgelesen:

### Beispiel 1: Schaummenge 110 ml; Vergleichsbeispiel 1: Schaummenge 140 ml.

Damit zeigt die unter Einsatz der erfindungsgemäßen Dispersionen hergestellte Leimflotte eine um 21,5% niedrigere Schaummenge als die unter Einsatz der Dispersion des Standes der Technik hergestellte Leimflotte.

## Patentansprüche

1. Kationische feinteilige wässrige Polymerdispersion, erhältlich durch Polymerisation eines Monomerengemisches bestehend aus
a) 20 - 60 Gew.-% mindestens eines gegebenenfalls substituierten Styrols,
b) 40 - 80 Gew.-% mindestens eines C₁-C₁₈-(Meth)Acrytsäureesters und
c) 0 - 20 Gew.-% mindestens eines von a) und b) verschiedenen, nichtionischen ethylenisch ungesättigten Monomers,
wobei die Summe aus a) + b) + c) 100 Gew.-% ergibt,
in Gegenwart einer wässrigen Polymerdispersion erhältlich durch eine in einem Lösungsmittel bestehend aus einer gesättigten C₁-C₆-Carbonsäure und maximal 20 Gew.% Wasser durchgeführten Lösungspolymerisation einer Monomerenmischung bestehend aus
d) 15 - 35 Gew.-% mindestens eines (Meth)acrylsäureesters und/oder (Meth)acrylamids, welches eine tertiäre Aminogruppe enthält,
e) 65 - 85 Gew.-% mindestens eines gegebenenfalls substituierten Styrols und
f) 0 - 20 Gew.-% mindestens eines von d) und e) verschiedenen, nichtionischen oder kationischen ethylenisch ungesättigten Monomers,
wobei die Summe aus d) + e) + f) 100 Gew.-% ergibt.

2. Kationische feinteilige wässrige Polymerdispersion gemäß Anspruch 1, **dadurch gekennzeichnet, dass** es sich bei der C₁-C₆-Carbonsäure um eine Monocarbonsäure handelt.

3. Kationische feinteilige wässrige Polymerdispersion gemäß einem oder mehreren der vorangegangenen Ansprüche 1 und 2, **dadurch gekennzeichnet, dass** es sich bei der C₁-C₆-Carbonsäure um Essigsäure handelt.

4. Kationische feinteilige wässrige Polymerdispersion gemäß einem oder mehreren der vorangegangenen Ansprüche 1 und 3, **dadurch gekennzeichnet, dass** es sich bei der wässrigen Polymerdispersion um eine 2 - 20 Gew.-%ige Polymerdispersion handelt.

5. Kationische feinteilige wässrige Polymerdispersion gemäß einem oder mehreren der vorangegangenen Ansprüche 1 und 4, **dadurch gekennzeichnet, dass** es sich bei den Monomeren a) und e) um Styrol handelt.

6. Kationische feinteilige wässrige Polymerdispersion gemäß einem oder mehreren der vorangegangenen Ansprüche 1 und 5, **dadurch gekennzeichnet, dass** als Monomer a) 30 bis 50 Gew.-% Styrol und als Monomer e) 70 bis 80 Gew.-% Styrol eingesetzt werden.

7. Kationische feinteilige wässrige Polymerdispersion gemäß einem oder mehreren der vorangegangenen Ansprüche 1 und 6, **dadurch gekennzeichnet, dass** als Monomere der Gruppe d) solche der Formel (I) eingesetzt werden 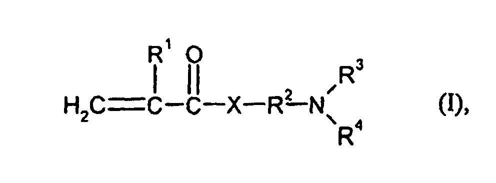 worin
R¹ für H oder Methyl steht,
R² für einen linearen C₁-C₄-Alkylenrest steht,
R³ und R⁴ gleich oder verschieden sind und für C₁-C₄-Alkyl stehen und
X für O oder NH steht.

8. Kationische feinteilige wässrige Polymerdispersion gemäß einem oder mehreren der vorangegangenen Ansprüche 1 und 7, **dadurch gekennzeichnet, dass** als Monomer d) 20 bis 30 Gew.-% der Verbindungen der Formel (I) gemäß Anspruch 7 eingesetzt werden.

9. Kationische feinteilige wässrige Polymerdispersion gemäß einem oder mehreren der vorangegangenen Ansprüche 1 und 8, **dadurch gekennzeichnet, dass** als Monomer b) mindestens eine Verbindung aus der Reihe Methylacrylat, Methylmethacrylat, Ethylacrylat, Ethylmethacrylat, Propylacrylat, Propylmethacrylat, n-Butylacrylat, iso-Butylacrylat, tert.-Butylacrylat, n-Butylmethacrylat, iso-Butylmethacrylat, tert.-Butylmethacrylat, Hexylacrylat, Hexylmethacrylat, Ethylhexylacrylat, Stearylacrylat und Stearylmethacrylat eingesetzt wird.

10. Verfahren zur Herstellung der kationischen feinteiligen wässrigen Polymerdispersionen gemäß einem oder mehreren der vorangegangenen Ansprüche 1 und 9, durch Herstellung einer Polymerdispersion durch Lösungspolymerisation einer Monomerenmischung bestehend aus
d) 15 bis 35 Gew.-% mindestens eines (Meth)acrylsäureesters und/oder (Meth)acrylamids, welches eine tertiäre Aminogruppe enthält
e) 65 bis 85 Gew.-% mindestens eines gegebenenfalls substituierten Styrols und
f) 0 bis 20 Gew.-% mindestens eines von d) und e) verschiedenen nichtionischen oder kationischen ethylenisch ungesättigten Monomers,
wobei die Summe aus d) + e) + f) 100 Gew.-% ergibt,
in einem Lösungsmittel bestehend aus einer gesättigten C₁-C₆-Carbonsäure und maximal 20 Gew.-% Wasser, versetzen der Polymerdispersion mit Wasser zur Herstellung einer wässrigen Polymerdispersion und Emulsionspolymerisation eines Monomeren-gemisches bestehend aus
a) 20 bis 60 Gew.-% mindestens eines gegebenenfalls substituierten Styrols,
b) 40 bis 80 Gew.-% mindestens eines C₁-C₁₈-(Meth)Acrylsäureesters und
c) 0 bis 20 Gew.-% mindestens eines von a) und b) verschiedenen, nichtionischen ethylenisch ungesättigten Monomeren,
wobei die Summe aus a) + b) + c) 100 Gew.-% ergibt,
in Gegenwart besagter wässriger Polymerdispersion.

11. Verfahren gemäß Anspruch 10, **dadurch gekennzeichnet, dass** nach Beendigung der Emulsionspolymerisation ein öllöslicher, in Wasser schwerlöslicher Radikalstarter zu Nachaktivierung zugesetzt wird.

## Claims

1. Cationic finely divided aqueous polymer dispersion, obtainable by polymerization of a monomer mixture consisting of
a) 20 - 60% by weight of at least one optionally substituted styrene,
b) 40 - 80% by weight of at least one C₁-C₁₈-(meth)acrylic acid ester and
c) 0 - 20% by weight of at least one nonionic ethylenically unsaturated monomer differing from a) and b),
the sum of a) + b) + c) being 100% by weight,
in the presence of an aqueous polymer dispersion obtainable by a solution polymerization, carried out in a solvent consisting of a saturated C₁-C₆-carboxylic acid and not more than 20% by weight of water, of a monomer mixture consisting of
d) 15 - 35% by weight of at least one (meth)acrylic acid ester and/or (meth)acrylamide which contains a tertiary amino group,
e) 65 - 85% by weight of at least one optionally substituted styrene and
f) 0 - 20% by weight of at least one nonionic or cationic ethylenically unsaturated monomer differing from d) and e),
the sum of d) + e) + f) being 100% by weight.

2. Cationic finely divided aqueous polymer dispersion according to Claim 1, **characterized in that** the C₁-C₆-carboxylic acid is a monocarboxylic acid.

3. Cationic finely divided aqueous polymer dispersion according to one or more of the preceding Claims 1 and 2, **characterized in that** the C₁-C₆-carboxylic acid is acetic acid.

4. Cationic finely divided aqueous polymer dispersion according to one or more of the preceding Claims 1 and 3, **characterized in that** the aqueous polymer dispersion is a 2 - 20% strength by weight polymer dispersion.

5. Cationic finely divided aqueous polymer dispersion according to one or more of the preceding Claims 1 and 4, **characterized in that** the monomers a) and e) are styrene.

6. Cationic finely divided aqueous polymer dispersion according to one or more of the preceding Claims 1 and 5, **characterized in that** 30 to 50% by weight of styrene are used as monomer a) and 70 to 80% by weight of styrene are used as monomer e).

7. Cationic finely divided aqueous polymer dispersion according to one or more of the preceding Claims 1 and 6, **characterized in that** monomers of the formula (I) 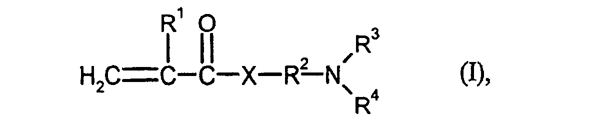 in which
R¹ represents H or methyl,
R² represents a linear C₁-C₄-alkylene radical,
R³ and R⁴ are identical or different and represent C₁-C₄-alkyl and
X represents O or NH,
are used as monomers of the group d).

8. Cationic finely divided aqueous polymer dispersion according to one or more of the preceding Claims 1 and 7, **characterized in that** 20 to 30% by weight of the compounds of the formula (I) according to Claim 7 are used as monomer d).

9. Cationic finely divided aqueous polymer dispersion according to one or more of the preceding Claims 1 and 8, **characterized in that** at least one compound from the series methyl acrylate, methyl methacrylate, ethyl acrylate, ethyl methacrylate, propyl acrylate, propyl methacrylate, n-butyl acrylate, iso-butyl acrylate, tert-butyl acrylate, n-butyl methacrylate, iso-butyl methacrylate, tert-butyl methacrylate, hexyl acrylate, hexyl methacrylate, ethylhexyl acrylate, stearyl acrylate and stearyl methacrylate is used as monomer b).

10. Process for the preparation of the cationic finely divided aqueous polymer dispersions according to one or more of the preceding Claims 1 and 9, by preparation of a polymer dispersion by solution polymerization of a monomer mixture consisting of
d) 15 to 35% by weight of at least one (meth)acrylic acid ester and/or (meth)acrylamide which contains a tertiary amino group,
e) 65 to 85% by weight of at least one optionally substituted styrene and
f) 0 to 20% by weight of at least one nonionic or cationic ethylenically unsaturated monomer differing from d) and e),
the sum of d) + e) + f) being 100% by weight,
in a solvent consisting of a saturated C₁-C₆-carboxylic acid and not more than 20% by weight of water, addition of water to the polymer dispersion for the preparation of an aqueous polymer dispersion and emulsion polymerization of a monomer mixture consisting of
a) 20 to 60% by weight of at least one optionally substituted styrene,
b) 40 to 80% by weight of at least one C₁-C₁₈-(meth)acrylic acid ester and
c) 0 to 20% by weight of at least one nonionic ethylenically unsaturated monomer differing from a) and b),
the sum of a) + b) + c) being 100% by weight,
in the presence of said aqueous polymer dispersion.

11. Process according to Claim 10, **characterized in that**, after the end of the emulsion polymerization, an oil-soluble free radical initiator sparingly soluble in water is added for subsequent activation.

## Revendications

1. Dispersion aqueuse finement divisée de polymères cationiques qui peut être obtenue par polymérisation d'un mélange de monomères consistant en
a) 20-60 % en masse d'au moins un styrène éventuellement substitué,
b) 40-80 % en masse d'au moins un C₁-C₁₈-(méth)acrylate, et
c) 0-20 % en masse d'au moins un monomère éthyléniquement insaturé non ionique différent de a) et b),
où la somme de a) + b) + c) donne 100 % en masse,
en présence d'une dispersion aqueuse de polymères pouvant être obtenue par une polymérisation en solution conduite dans un solvant consistant en un acide C₁-C₆-carboxylique saturé et en 20 % en masse d'eau au maximum, d'un mélange de monomères consistant en
d) 15-35 % en masse d'au moins un (méth)acrylate et/ou (méth)acrylamide, qui contient un groupe amino tertiaire,
e) 65-85 % en masse d'au moins un styrène éventuellement substitué, et
f) 0-20 % en masse d'au moins un monomère éthyléniquement insaturé non ionique ou cationique différent de d) et e),
où la somme de d) + e) + f) donne 100 % en masse.

2. Dispersion aqueuse finement divisée de polymères cationiques selon la revendication 1, **caractérisée en ce que** l'acide C₁-C₆-carboxylique est un acide monocarboxylique.

3. Dispersion aqueuse finement divisée de polymères cationiques selon une ou plusieurs des revendications 1 et 2 précédentes, **caractérisée en ce que** l'acide C₁-C₆-carboxylique est l'acide acétique.

4. Dispersion aqueuse finement divisée de polymères cationiques selon une ou plusieurs des revendications 1 et 3 précédentes, **caractérisée en ce que** la dispersion aqueuse de polymères est une dispersion de polymères à 2-20 % en masse.

5. Dispersion aqueuse finement divisée de polymères cationiques selon une ou plusieurs des revendications 1 et 4 précédentes, **caractérisée en ce que** les monomères a) et e) sont le styrène.

6. Dispersion aqueuse finement divisée de polymères cationiques selon une ou plusieurs des revendications 1 et 5 précédentes, **caractérisée en ce que** l'on utilise comme monomère a) 30 à 50 % en masse de styrène et comme monomère e) 70 à 80 % en masse de styrène.

7. Dispersion aqueuse finement divisée de polymères cationiques selon une ou plusieurs des revendications 1 et 6 précédentes, **caractérisée en ce que** l'on utilise comme monomères du groupe d) ceux de formule (I) 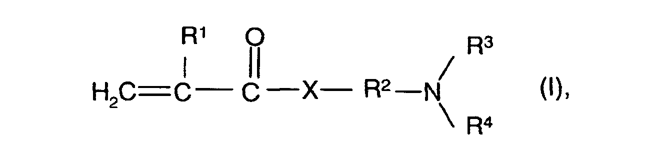 où
R¹ représente H ou méthyle,
R² représente un groupement C₁-C₄-alkylène linéaire,
R³ et R⁴ sont identiques ou différents et représentent C₁-C₄-alkyle, et
X représente O ou NH.

8. Dispersion aqueuse finement divisée de polymères cationiques selon une ou plusieurs des revendications 1 et 7 précédentes, **caractérisée en ce que** l'on utilise comme monomère d) 20 à 30 % en masse des composés de formule (I) selon la revendication 7.

9. Dispersion aqueuse finement divisée de polymères cationiques selon une ou plusieurs des revendications 1 et 8 précédentes, **caractérisée en ce que** l'on utilise comme monomère b) au moins un composé de la série acrylate de méthyle, méthacrylate de méthyle, acrylate d'éthyle, méthacrylate d'éthyle, acrylate de propyle, méthacrylate de propyle, acrylate de n-butyle, acrylate d'isobutyle, acrylate de tert-butyle, méthacrylate de n-butyle, méthacrylate d'isobutyle, méthacrylate de tert-butyle, acrylate d'hexyle, méthacrylate d'hexyle, acrylate d'éthylhexyle, acrylate de stéaryle et méthacrylate de stéaryle.

10. Procédé de production des dispersions aqueuses finement divisées de polymères cationiques selon une ou plusieurs des revendications 1 et 9 précédentes par production d'une dispersion de polymères par polymérisation en solution d'un mélange de monomères consistant en
d) 15 à 35 % en masse d'au moins un (méth)acrylate et/ou (méth)acrylamide, qui contient un groupe amino tertiaire,
e) 65 à 85 % en masse d'au moins un styrène éventuellement substitué, et
f) 0 à 20 % en masse d'au moins un monomère éthyléniquement insaturé non ionique ou cationique différent de d) et e),
où la somme de d) + e) + f) donne 100 % en masse,
dans un solvant consistant en un acide C₁-C₆-carboxylique saturé et en 20 % en masse d'eau au maximum, addition d'eau à la dispersion de polymères pour produire une dispersion aqueuse de polymères et polymérisation en émulsion d'un mélange de monomères consistant en
a) 20 à 60 % en masse d'au moins un styrène éventuellement substitué,
b) 40 à 80 % en masse d'au moins un C₁-C₁₈-(méth)acrylate, et
c) 0 à 20 % en masse d'au moins un monomère éthyléniquement insaturé non ionique différent de a) et b),
où la somme de a) + b) + c) donne 100 % en masse,
en présence de ladite dispersion aqueuse de polymères.

11. Procédé selon la revendication 10, **caractérisé en ce qu'**après la fin de la polymérisation en émulsion, un initiateur radicalaire soluble dans l'huile, peu soluble dans l'eau est ajouté pour la post-activation.
